# EUROPEAN PATENT APPLICATION

(11) **EP 4 760 207 A1**
(43) Date of publication of application: **17.06.2026**
(21) Application number: 24219236.7
(22) Date of filing: 11.12.2024
(51) Int. Cl.: G01C 21/00

(54) **DETERMINING REPRESENTATIVE VEHICLE PATHS THROUGH A ROAD NETWORK**

(71) Applicant: TomTom Traffic B.V., 1011 AC Amsterdam (NL)
(72) Inventor: WITTE, Nikolaus, 1011 Amsterdam (NL); BYFUT, Andreas, 1011 Amsterdam (NL); VON REPPERT, Evamarie, 1011 Amsterdam (NL); TEIXEIRA, Filipe, 1011 Amsterdam (NL)
(74) Representative: Dehns

(57) **Abstract**

A method (300) of determining representative vehicle paths along a sequence of road segments of a road network, a processing system (134) configured to carry out the method, and software having instructions which, when executed, cause the processing system (134) to carry out the method (300). For each of the road segments, at least one respective segment-specific route index is determined for each of plurality of vehicle traces. The segment-specific route index is selected from a predetermined set of route indices for the road segment, and each index corresponds to a different set of possible routes along the road segment. This determines a respective sequence of route indices for each of the vehicle traces. The vehicle traces are partitioned into groups based similarities between the sequences of route indices. For each of the groups of vehicle traces, a representative vehicle path is determined along the sequence of road segments.

## Description

### TECHNICAL FIELD

This invention relates to determining representative vehicle paths through a road network.

### BACKGROUND

Collecting and analysing vehicle movement data can be useful for helping autonomous cars to drive in a more human-like fashion, which may in turn lead to safer interactions with other road traffic. It can also be useful for aiding human drivers when driving along a dangerous or complicated section of road. Existing systems, such as advanced driver-assistance systems (ADAS), which can directly control the movement of a vehicle, or provide additional assistance information to the driver, are already implemented in many vehicles.

The present disclosure aims to provide improved methods of determining typical vehicle paths, which may be useful to aid vehicles travelling through a road network.

### SUMMARY

From a first aspect, the invention provides a method of determining representative vehicle paths along a sequence of road segments of a road network, the method comprising:
accessing a plurality of vehicle traces, each vehicle trace comprising a respective sequence of geographical positions for a respective vehicle as the vehicle transits the sequence of road segments;
for each of the road segments of the sequence of road segments, processing each of the vehicle traces to determine at least one respective segment-specific route index for the vehicle trace, wherein the segment-specific route index is selected from a predetermined set of one or more route indices for the road segment, each segment-specific route index corresponding to a different set of possible routes along the road segment, and thereby determining, for each of the plurality of vehicle traces, a respective sequence of route indices;
determining a similarity-based partitioning of the plurality of sequences of route indices and thereby partitioning the plurality of vehicle traces into a plurality of groups of vehicle traces; and
for each of the groups of vehicle traces, processing the sequence of geographical positions of one or more vehicle traces of the group to determine a representative vehicle path for the group along the sequence of road segments.

The applicant has appreciated that using recorded vehicle traces to determine representative vehicle paths along a portion of a road network can provide useful information about typical vehicle behaviour through the road network. However, partitioning a large collection of vehicle traces based on similarities between their respective sequence of geographical positions may be very computationally intensive. Instead, embodiments of the invention partition vehicle traces into groups based on similarities between corresponding sequences of route indices (e.g. sequences of integer values). Partitioning based on route indices instead of geographical coordinates can enable representative vehicle paths to be determined more efficiently.

Some or all of the vehicle traces may comprise a plurality of geographical positions within a single road segment of the sequence of road segments. Thus each vehicle trace may comprise a relatively large amount of data (e.g. containing several latitude-longitude coordinates) for each road segment. By contrast, each segment-specific route index may be a single character or value (e.g. an integer) selected from a predetermined set of characters or values. In some embodiments, each set of one or more route indices may consist of sequential indices - e.g. sequential integers. For example, for each road segment, each set of route indices may contain up to thirty members. Thus a sequence of route indices can provide a very compact representation of each vehicle trace. This can save space and make subsequent processing more efficient.

From a further aspect the invention provides software (e.g. on a non-transitory computer-readable storage medium) comprising instructions which, when executed on a processing system, cause the processing system to carry out a method of determining representative vehicle paths along a sequence of road segments of a road network, wherein the method comprises:
accessing a plurality of vehicle traces, each vehicle trace comprising a respective sequence of geographical positions for a respective vehicle as the vehicle transits the sequence of road segments;
for each of the road segments of the sequence of road segments, processing each of the vehicle traces to determine at least one respective segment-specific route index for the vehicle trace, wherein the segment-specific route index is selected from a predetermined set of one or more route indices for the road segment, each segment-specific route index corresponding to a different set of possible routes along the road segment, and thereby determining, for each of the plurality of vehicle traces, a respective sequence of route indices;
determining a similarity-based partitioning of the plurality of sequences of route indices and thereby partitioning the plurality of vehicle traces into a plurality of groups of vehicle traces; and
for each of the groups of vehicle traces, processing the sequence of geographical positions of one or more vehicle traces of the group to determine a representative vehicle path for the group along the sequence of road segments.

From a further aspect the invention provides a processing system configured to determine representative vehicle paths along a sequence of road segments of a road network, wherein the processing system is arranged to:
access a plurality of vehicle traces, each vehicle trace comprising a respective sequence of geographical positions for a respective vehicle as the vehicle transits the sequence of road segments;
for each of the road segments of the sequence of road segments, process each of the vehicle traces to determine at least one respective segment-specific route index for the vehicle trace, wherein the segment-specific route index is selected from a predetermined set of one or more route indices for the road segment, each segment-specific route index corresponding to a different set of possible routes along the road segment, and thereby determine, for each of the plurality of vehicle traces, a respective sequence of route indices;
determine a similarity-based partitioning of the plurality of sequences of route indices and thereby partitioning the plurality of vehicle traces into a plurality of groups of vehicle traces; and
for each of the groups of vehicle traces, process the sequence of geographical positions of one or more vehicle traces of the group to determine a representative vehicle path for the group along the sequence of road segments.

The processing system may access the vehicle traces from a local memory of the processing system, or it may be communicatively coupled to a server system over a network (which may include the Internet), and may be configured to access the plurality of vehicle traces by retrieving the vehicle traces from the server system over the network. The server system and/or the local memory may be arranged to store historical vehicle traces generated using data collected from vehicles travelling through the road network. The server system may be physically separate to the processing system, or may be co-located.

The processing system may be configured to store the determined representative vehicle paths in a local or remote memory, e.g. in a database. The processing system may be configured for communication with a vehicle control system (e.g. a driver-assistance system) of a vehicle travelling through the road network. The processing system may be further configured to send data comprising the representative vehicle paths to the vehicle control system of the vehicle. The processing system may be configured to send data to the vehicle control system periodically, e.g. once every day, once every month, or at any other suitable regular interval. Alternatively the processing system may be configured to send data to the vehicle control system in response to an update condition being satisfied. An update condition may be satisfied when a number of newly determined representative vehicle paths exceeds a threshold. Alternatively or additionally, an update condition may be satisfied when a predetermined time has elapsed since a previous occasion on when the processing system sent data to the vehicle control system.

From another aspect, the invention provides a vehicle control system for a vehicle travelling through a road network, wherein the vehicle control system is configured to:
access data comprising one or more representative vehicle paths along a sequence of road segments of the road network;
determine a geographical position of the vehicle;
select one of the representative vehicle paths based upon the determined geographical position of the vehicle; and
use information derived from the selected representative vehicle path to control movement of the vehicle or to communicate the information to a driver of the vehicle.

The vehicle control system may be arranged to access the data comprising one or more representative vehicle paths by receiving it from a processing system as disclosed herein. The processing system may be remote from the vehicle, or it may be located in the vehicle, or it may be distributed between a remote location and a location in the vehicle. A memory or storage device of the vehicle control system may store representative vehicle paths for the road network (e.g. received from the processing system, or manually loaded). Accessing data comprising the one or more representative vehicle paths through the road network may comprise retrieving said data from a database, which may be in the vehicle, wherein the database comprises the representative vehicle paths for the road network.

The vehicle control system may determine the geographical position of the vehicle from sensor data output by one or more sensors in or on the vehicle. The one or more sensors may comprise a global navigation satellite system (GNSS) sensor arranged to receive satellite positioning signals. In some embodiments, the one or more sensors additionally comprise one or both of an accelerometer and a camera. The camera may be an externally facing camera arranged to capture images of the vehicle's environment. Using multiple sensors may advantageously improve the accuracy of the determined geographical position of the vehicle.

The processing system and one or more such vehicle control systems may together form a vehicle management system.

From another aspect, the invention provides a vehicle management system comprising a processing system as disclosed herein in combination with a vehicle control system as disclosed herein, wherein the vehicle control system is configured to:
receive from the processing system the data comprising the representative vehicle paths along the sequence of road segments of the road network;
determine a geographical position of the vehicle;
select one of the representative vehicle paths based upon the determined geographical position of the vehicle; and
use information derived from the selected representative vehicle path to control movement of the vehicle or to communicate the information to a driver of the vehicle.

The vehicle control system or the processing system may be configured to process the representative vehicle paths, or driving attribute data associated therewith, to identify one or more sections of the sequence of road segments as potentially hazardous.

In any of the aspects or embodiments disclosed herein, each sequence of geographical positions for a respective vehicle, used to determine the representative paths, may have been determined using one or more sensors in or on the respective vehicle. Some embodiments may comprise generating the plurality of vehicle traces by one or more vehicles, but in other embodiments these are generated in advance of determining the representative vehicle paths. The one or more sensors may comprise a global navigation satellite system (GNSS) sensor arranged to receive satellite positioning signals. In some embodiments, the one or more sensors additionally comprise one or both of an accelerometer and a camera. The camera may be an externally facing camera arranged to capture images of the vehicle's environment. Using multiple sensors may advantageously improve the accuracy of each vehicle trace.

In some embodiments, each geographical position of a vehicle trace is determined by one or more contemporaneous sensor measurements (e.g. from a GNSS receiver). Further, in some other embodiments, one or more of the geographical positions may be calculated, e.g. being derived from other geographical positions of the sequence by interpolation.

Traditional navigation systems based on the output from a GNSS sensor may use the GNSS sensor data to match the position of a vehicle to a point on a route in a digital map, thereby determining a map-matched position of the vehicle. This map-matched position may replace the original position indicated by the sensor data when the position is used by the navigation system. However, detailed information about the position of the vehicle (e.g. which lane the vehicle is driving in) may not be adequately captured by the map-matched position alone.

Although some of the road segments of the sequence may be associated with only a single respective route index, preferably one or more of the road segments is associated with a respective plurality of route indices, from which a segment-specific route index can be selected.

A segment-specific route index may represent a respective lateral position of a respective route along a road segment. A segment-specific route index may be a segment-specific lateral-position index. A vehicle trace may be processed to determine a sequence of lateral displacements values for the vehicle trace. In a set of embodiments, for each vehicle trace, a respective lateral displacement value is determined for all or a subset of the geographical positions in the sequence of geographical positions. Each lateral displacement value may indicate a lateral (e.g. orthogonal) displacement of the geographical position relative to a reference route along the sequence of road segments.

The applicant has recognised that determining the lateral displacement of the vehicles relative to a reference route along the sequence of road segments can efficiently capture information that is useful for partitioning the plurality of vehicle traces into groups. Thus, representing vehicle positions as a sequence of one or more lateral displacement values may provide a more efficient input to the step of determining representative vehicle paths, e.g. compared to partitioning the sequence of geographical positions directly.

The reference route along the sequence of road segments may be determined in advance of performing the method. The reference route could, for example, be stored alongside digital map data associated with the road network and retrieved by the processing system. However, in some embodiments, the reference route is determined by processing a set of vehicle traces, wherein each vehicle trace comprises a respective sequence of geographical positions for a respective vehicle as the vehicle transits the sequence of road segments. This set of vehicle traces may be all or a subset of the aforesaid plurality of vehicle traces. In some embodiments, determining the reference route comprises selecting one of the vehicle traces from the plurality of vehicle traces. A vehicle trace may be selected arbitrarily (e.g. at random) or it may represent an average vehicle trace. In some embodiments, the reference route may be determined by processing the plurality of vehicle traces to calculate an average vehicle trace. The reference route may be or may follow the average vehicle trace.

Calculating an average vehicle trace may comprise:
selecting a first vehicle trace from the plurality of vehicle traces (e.g. arbitrarily);
determining a series of orthogonal lines at points (which may be regularly or irregularly spaced) along the first vehicle trace;
for each orthogonal line:
   determining a respective intersection point between the orthogonal line and each vehicle trace of the plurality of vehicle traces thereby determining a set of intersection points for the orthogonal line; and
   calculating an average intersection point from the set of intersection points; and
constructing an average vehicle trace comprising a sequence of the respective average intersection point for each orthogonal line.

Calculating an average intersection point may comprise determining a median or mean intersection point from the set of intersection points.

For each vehicle trace of the plurality of vehicle traces, a lateral displacement relative to the calculated average vehicle trace may then be determined for all or a subset of the geographical positions of the vehicle trace.

The applicant has found that using a reference route that has been determined by processing actual vehicle traces may be advantageous compared to using a reference route that has been determined according to topological data associated with a digital map (although this may be done in some embodiments). The applicant has found that the lateral displacement values that are subsequently determined relative to the reference route may be more representative of the variation in positions of vehicles relative to one another as they move along the route through the road network.

In some embodiments, the method comprises, for each of the road segments of the sequence of road segments, processing each of the sequences of lateral displacement values to determine at least one respective segment-specific route index for each vehicle trace. Thus, in these embodiments, the assignment of each segment-specific route index depends upon the lateral displacement values determined for the respective vehicle trace along the road segment. This allows groups of vehicle traces that follow a similar route along the road segment, in terms of lateral displacement, to be identified.

Each segment-specific route index may be a segment-specific lane index. It may correspond to a traffic lane - e.g. a division of the road intended to separate lines of traffic. Such traffic lanes may be delineated by markings on the road surface. Thus, the predetermined set of route indices for each road segment may be a respective set of lane indices corresponding to lanes or lane markings on the respective road segment. However, the applicant has appreciated that, in reality, traffic flow through a road segment may not be limited to being contained within lanes delineated by markings on the road surface. Traffic may nonetheless exhibit predictable behaviour by generally following one of a set of typical routes along a road segment. For example, in some road segments, vehicles may not typically precisely follow the lanes marked on the road, but may typically cut the corner at a particular junction. In other scenarios, there may be road segments with no marked lanes, but where traffic nevertheless follows predictable paths-e.g. at the exit of a toll plaza, paved or tarmac roads, etc. Thus, in some embodiments, each segment-specific route index may correspond to a route that is regularly followed, or is expected to be regularly followed, by vehicles transiting the road segment. In this sense, a segment-specific route index may still be considered a lane index of corresponding traffic lanes, but need not correspond to lanes marked on the road surface.

Routes which are regularly followed by vehicles through each road segment may be identified using historical vehicle movement data obtained from or for vehicles that transit the road segment. Therefore, in some embodiments, for each road segment, the set of segment-specific route indices has been, or is, determined by processing a plurality of vehicle traces, each vehicle trace comprising a respective sequence of geographical positions for a respective vehicle as the vehicle transits the road segment. This plurality of vehicle traces may be the same as, or overlap with, or be distinct from, the plurality of vehicle traces used for determining the representative vehicle paths along the route through the road network. Said plurality of vehicle traces may comprise a subset of the vehicle traces used for determining the representative vehicle paths, or it may consist of a different plurality of vehicle traces altogether.

Each segment-specific route index may correspond to a different cluster of possible routes through along the road segment. The possible routes may be spatially clustered. Each possible route may correspond to a respective historic vehicle trace. In some embodiments, for each road segment of the sequence of road segments, the respective set of segment-specific route indices may be determined, or may have been determined, by grouping vehicle traces into one or more road-segment clusters, and assigning a different segment-specific route index to each road-segment cluster. In embodiments where a respective sequence of lateral displacement values is determined for each vehicle trace, the vehicle traces through the road segment may be grouped according to similarities between the sequences of lateral displacement values.

Determining the set of route indices by grouping actual vehicle traces for each road segment may advantageously allow the number of segment-specific route indices for each road segment to vary in dependence on actual vehicle movement through each road segment. For example, it may avoid artificially constraining the number of segment-specific route indices for each road segment to a known number of lanes marked on the road. This may result in a better representation of vehicle movement through each road segment. Adjacent road segments may be found to have the same number of segment-specific route indices as one another, or they may be found to have a different number of segment-specific route indices, as vehicle behaviour and/or lane markings change along the sequence of road segments.

The road segments may be defined in any appropriate way. At least in some embodiments, each road segment is determined such that a majority of vehicles follow a consistent route (i.e. corresponding to a respective route index) along the whole road segment. Each road segment may have a length such most vehicles stay within a consistent lane over the duration of the road segment. However, it is nevertheless possible that some vehicles change route (e.g. an atypical change of lane) within the duration of a road segment. Such a vehicle trace may be represented by a plurality of route indices for the road segment. In some embodiments, each vehicle trace may be assigned a best-matched segment-specific route index. This may help stabilize the data and/or provide a more compact representation. Thus, in some embodiments, for each road segment, exactly one respective segment-specific route index is determined for each vehicle trace, such that the method determines, for each of the plurality of vehicle traces, a respective sequence of route indices corresponding to the sequence of road segments.

In some embodiments where each of a plurality of vehicle traces is processed to determine a respective sequence of lateral displacement values, determining the sequences of route indices comprises, for each road segment of a plurality of road segments:
generating a road-segment data set comprising some or all of the lateral displacement values from each sequence of lateral displacement values along the road segment;
modelling a distribution of the lateral displacement values in the road-segment data set;
identifying one or more peaks within the distribution;
assigning each lateral displacement value to a cluster associated with a closest peak of the one or more peaks to the lateral displacement value;
assigning a different segment-specific route index to each cluster of lateral displacement values, whereby each lateral displacement value is assigned a segment-specific route index; and
for each vehicle trace through the road segment, determining a single respective segment-specific route index for the vehicle trace in dependence upon the segment-specific route indices assigned to the lateral displacement values of the respective sequence of lateral displacement values determined for the vehicle trace.

A segment-specific route index for each vehicle trace may be determined to be a modal segment-specific route index from the sequence of lateral displacement values (i.e. the most frequently occurring route index for the vehicle trace along the road segment). This may ensure that each vehicle trace through the road segment is associated with the single segment-specific route index that best represents the path of the vehicle through the road segment.

The applicant has appreciated that carrying out a step of reducing the sequence of geographical positions for each vehicle trace to a simplified sequence of route indices may improve the outcome of the partitioning of the plurality of vehicle traces into a plurality of groups of vehicle traces. Simplifying the input data in this manner may result in faster convergence of an algorithm used to partition the plurality of vehicle traces. It may also help to reduce the influence of any outliers in the data which may have arisen due to errors in the original sensor data used to determine the sequences of geographical positions. Similarly, it may help to reduce influence of errors in the digital map data.

Partitioning the plurality of vehicle traces into a plurality of groups using a similarity-based partitioning may comprise inputting the sequence of route indices for each vehicle trace to a clustering algorithm. The clustering algorithm may comprise a k-means clustering algorithm. While a plurality of vehicle traces will typically be partitioned into a plurality of groups of vehicle traces, the processing system may be configured such that, for some sequences of road segments, the partitioning results in only a single group of vehicle traces.

Determining a respective representative vehicle path for each of the groups of vehicle traces may comprise calculating an average vehicle trace by processing the sequences of geographical positions from all of the vehicle traces of the group. Each representative vehicle path may comprise a respective sequence of geographical positions (e.g. longitude-latitude coordinates). Determining a representative vehicle path for a group may comprise calculating a sequence of average geographical positions at points along the sequence of road segments, and may comprise using a spline interpolation of the sequence of average geographical positions to determine a geometric line through the sequence of road segments. Each average geographical position may comprise a mean or median lateral (e.g. orthogonal to a direction of travel) geographical position for the respective group of vehicle traces at a respective point along the route.

The representative vehicle paths may represent only the geographical geometry of the respective average vehicle trace for each group, but in some embodiments, they may also represent or be accompanied by vehicle attribute data. Some embodiments may comprise determining, for each of the groups of vehicle traces, a respective sequence of driving attribute values, each driving attribute value being associated with a respective point along the sequence of road segments. Each point along the sequence of road segments may be located in a different respective road segment. In some embodiments a respective driving attribute value is determined for each road segment of the sequence of road segments. Driving attribute values may comprise, but are not limited to, values associated with vehicle motion such as vehicle speed and/or vehicle acceleration. Additionally or alternatively, driving attribute values may comprise a number of vehicle traces, or a proportion of vehicle traces that are associated with each respective group of vehicle traces at the respective point along the sequence of road segments. In some embodiments, each driving attribute value in the sequence of driving attribute values may be a measure of vehicle speed. For example, each measure of vehicle speed may be computed as a mean (e.g. harmonic mean) of vehicle speeds associated with respective vehicle traces at a point along the sequence of road segments. Each measure of vehicle speed may additionally or alternatively comprise a free-flow speed, e.g. a measure of speed computed as a mean of a subset of vehicle speeds associated with respective vehicle traces at a point along the sequence of road segments. The subset of vehicle speeds may be selected as the top n^{th} percentile of vehicle speeds at the point along the sequence of road segments, e.g. the top 25^{th}, 50^{th} or 75^{th} percentile.

The representative vehicle paths or driving attribute data associated therewith may be further processed to identify one or more sections of the sequence of road segments as potentially hazardous. A warning may be output to a driver of a vehicle when the vehicle is approaching or within a section of the road network that has been identified as potentially hazardous. For example, in embodiments where the determined representative vehicle paths are sent to a driver-assistance system in a vehicle, a warning may be output by the driver-assistance system to a driver of the vehicle when the vehicle is approaching or within a section of the road network that has been identified as potentially hazardous. In some embodiments the sections of the road network which have been identified as potentially hazardous may be sent to a driver-assistance system in the vehicle, without additionally sending the determined representative vehicle paths. A visual, audible, or haptic warning may be issued, either individually or in any combination.

The vehicle control system (e.g. driver-assistance system) may be configured to identify one of the plurality of representative driving paths as matching a path of the vehicle (e.g. as best fitting the path that the vehicle is currently following). The vehicle may be an autonomous (i.e. driverless) vehicle, or it may have a driver. In both cases, a movement of the vehicle may be controlled or influenced or suggested, e.g. by the vehicle control system, at least partly in dependence on or in reference to driving attribute information associated with the identified representative vehicle path. For example, by comparing the position of the vehicle to the identified representative driving path, and using attribute information associated with the representative driving path, e.g. to determine a typical speed of vehicles travelling along this representative driving path, the vehicle control system may control movement of the vehicle to conform with the surrounding traffic and/or environment. In embodiments where the vehicle control system is implemented in an autonomous vehicle, the vehicle control system may directly control the speed of the vehicle, e.g. to match a typical speed determined using the identified representative driving path.

The sequence of road segments may represent a section of the road network with no junctions, or it may span one or more junctions. The sequence may represent traffic that takes a particular choice at each junction. The processing system, in addition to being configured to determine a plurality of representative vehicle paths along a sequence of road segments of a road network, may be configured to determine a single representative vehicle path along some sequences of road segments of the road network (e.g. along a single-lane highway where all traffic follows the same path). It may be configured to determine representative vehicle paths corresponding to two or more partially overlapping sequences of road segments of the road network, e.g. where the road network branches or merges at a junction.

The processing system may be in a single location (e.g. comprising a single server or workstation), or it may be a distributed system. The server storing vehicle traces may be a single server or a distributed server system.

Any of the processing steps disclosed herein may be performed by software executing on one or more processors, or by hardware, or by a combination of software and hardware. Information may be communicated by wired and/or wireless channels.

Information such as vehicle traces, route indices, representative paths, etc., may be encoded in any appropriate way. Data comprising such information may be compressed, decompressed, encoded, or decoded, etc. during storage, communication or processing.

Features of any aspect or embodiment described herein may, wherever appropriate, be applied to any other aspect or embodiment described herein. Where reference is made to different embodiments or sets of embodiments, it should be understood that these are not necessarily distinct but may overlap.

### BRIEF DESCRIPTION OF THE DRAWINGS

Certain preferred embodiments of the invention will now be described, by way of example only, with reference to the accompanying drawings, in which:
Figure 1 is a schematic diagram of an exemplary system embodying the invention;
Figure 2 is a satellite photo of an intersection in a road network overlaid with geometric lines representing different vehicle paths;
Figure 3 is a flow chart depicting a method carried out by a vehicle behaviour processing system to determine representative vehicle traces in accordance with embodiments of the invention;
Figure 4 is a schematic diagram of vehicle traces alongside a reference route corresponding to the centreline of a road in a digital map;
Figure 5 is a plot showing lateral displacement data generated by converting vehicle traces to lateral displacement values using the centreline of a road in a digital map as a reference route;
Figure 6 is a schematic diagram showing original vehicle traces along a section of a route;
Figure 7 is a schematic diagram showing a series of orthogonal lines computed along the length of one of the vehicle traces shown in Figure 6;
Figure 8 is a schematic diagram showing an average vehicle trace constructed using the orthogonal lines shown in Figure 7;
Figure 9 is a schematic diagram showing a close-up view of an example of a set of intersection points determined between an orthogonal line and the vehicle traces;
Figure 10 is a plot showing lateral displacement data generated using an average vehicle trace as the reference route;
Figure 11 is a plot that divides the lateral displacement data shown in Figure 10 into smaller segments;
Figure 12 is a plot of an isolated segment of lateral displacement data extracted from the lateral displacement data shown in Figure 10 and Figure 11;
Figure 13 is a plot showing a modelled distribution of the segment of lateral displacement data shown in Figure 12;
Figure 14 is a plot showing the segment of lateral displacement data shown in Figure 12 labelled according to the segment-specific indices assigned to the lateral displacement values;
Figure 15 is a distance-aligned chart showing the plot of Figure 10 above modelled route indices and two example sequences of route indices determined for two vehicle traces in accordance with embodiments of the invention;
Figure 16 is a plot depicting a large number of vehicle traces along a sequence of road segments represented as sequences of route indices;
Figure 17 is a plot showing several groups of vehicle traces identified by clustering the sequences of route indices shown in Figure 16;
Figure 18 shows three exemplary representative vehicle paths overlaid on a section of a digital map; and
Figure 19 shows a section of the representative vehicle paths shown in Figure 18, with associated speed data.

### DETAILED DESCRIPTION

Gaining an insights into typical vehicle movements is beneficial for safely implementing driving systems in autonomous vehicles, or driver-assistance systems in driver-controlled vehicles. Many contemporary vehicles have an advanced driver-assistance system (ADAS) which provides additional information to the driver of a vehicle and/or directly controls the movement of a vehicle. An ADAS can typically control the speed and direction of a vehicle based on information about the speed limit and layout of the road. An ADAS may implement this by directly controlling the speed and direction of the vehicle, and/or by suggesting changes to the driver, e.g. via a dashboard display. Systems for alerting a driver and/or for controlling the movement of a vehicle, like ADASs, autonomous or not, may be referred to herein as vehicle control systems.

The applicant has appreciated that it may be beneficial for vehicle control systems to also have access to information about the typical motion of vehicles along a stretch of road, in addition to any topological data associated with a digital map. This can allow an autonomous vehicle to better mimic human drivers, meaning it can drive more safely alongside other road users. The same information may also be useful for drivers who are new to driving along a particular stretch of road.

The applicant has appreciated that, in particular, a more accurate record of the paths which vehicles typically take through a section of a road network may can be useful, e.g. for informing vehicle control systems. There may be several scenarios where the actual path driven by a vehicle deviates from an expected path according to a topological map. For example, as a vehicle travels across a junction, drivers may take a path that does not exactly follow the topological geometry (e.g. a centreline) of a corresponding digital road map. In another example, along a particular stretch of road, there might be multiple different paths that vehicles typically take. For example, vehicles that are approaching a junction may drive in one lane or road position for an extended stretch of road, before changing lanes in advance of an off-ramp. Other vehicles that are continuing along the same road, however, may remain in the same lane. Providing a vehicle control system with information about when traffic typically changes lane in advance of the off-ramp may improve the safety of a vehicle navigating the stretch of road, e.g. by allowing the system to slow the vehicle automatically if the driver follows a path matching that typically taken by vehicles before they take the off-ramp.

Typical driver behaviour can be determined by processing historical data including GNSS (e.g. GPS) traces of the paths which large numbers of vehicles have taken through a stretch of road. However, mapping vehicle movement for large geographical regions presents significant challenges due to the volume of data involved. The methods and systems described can provide an efficient way of determining typical vehicle paths, and providing this to vehicle control systems.

In order to collect data at the resolution required to map different paths taken by vehicles over the same stretch of road, high-resolution positioning data is required. Vehicles used to collect suitable motion data may include a global positioning system (GPS) sensor arranged to receive satellite signals. Other sensors, in addition to GPS, can be used to generate a more accurate vehicle trace. For example, vehicles can include externally facing cameras arranged to capture images or artefacts such as roadside traffic signs, lanes, bridges, and other recognisable features at known locations. The location of these features relative to the vehicle can be used, alongside data from a GPS sensor, to determine a more accurate vehicle position. A sequence (i.e. time series) of geographical positions as a vehicle travels along a sequence of road segments of a road network may be stored as a vehicle trace. These vehicle traces may also have attribute data associated with them describing, for example, the speed and/or the acceleration of the vehicle as it travels along a route. Data from the GPS sensor may comprise the speed of the vehicle, or the speed of the vehicle may be derived from GPS sensor data. Vehicle acceleration may be derived from GPS sensor data - e.g. using the speed of the vehicle or the position of the vehicle.

Some embodiments of the invention may process historical data including large numbers of vehicle traces in order to generate a set of representative vehicle paths which characterise typical vehicle behaviour through a road network. A vehicle control system can then access a database of these representative vehicle paths. When a vehicle is travelling along a road, the vehicle control system may determine which section of road it is currently travelling along, and retrieve one or more corresponding representative paths from a database containing a number of determined representative paths within the road network. Such a database may be referred to herein as a behaviour map database.

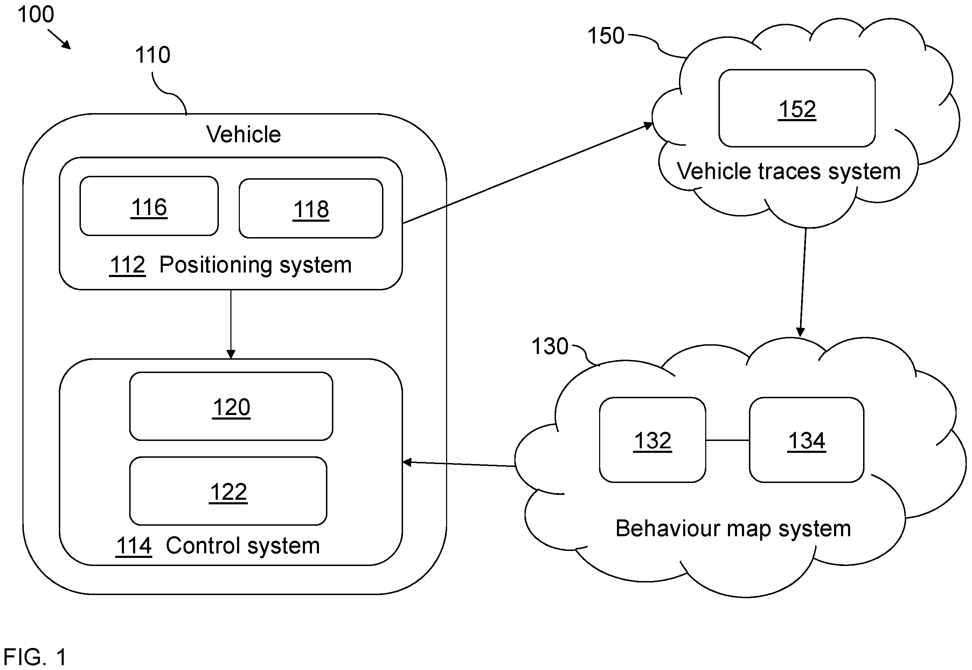

Figure 1 is a schematic diagram of a system 100 suitable for implementing embodiments of the invention described herein. A vehicle 110 comprises a vehicle positioning system 112 and a vehicle control system 114. The vehicle control system 114 is communicatively coupled to a behaviour map server system 130 and the behaviour map server system 130 is communicatively coupled to a vehicle traces server system 150. Whilst the behaviour map server system 130 is shown as a separate to the vehicle traces server system 150 in Figure 1, they could be co-located.

The behaviour map server system 130 comprises a central behaviour map database 132 containing a set of representative paths which characterise typical vehicle movement through a road network. The behaviour map server system 130 also comprises a vehicle behaviour processing system 134 (embodying the processing system disclosed herein) which is arranged to generate data for inclusion in the central behaviour map database 132. The vehicle behaviour processing system 134 comprises one or more processors and memory storing software for execution by the one or more processors to perform processing operations as described herein. The vehicle traces server system 150 comprises a vehicle traces database 152 containing a large number of historical vehicle traces through the road network. The vehicle behaviour processing system 134 is communicatively coupled to the vehicle traces server system 150, in order to access the vehicle traces database 152. The vehicle 110 and server systems 150, 130 may each comprise communication circuitry for exchanging data over wired and/or wireless networks (e.g. over cellular radio to and from the vehicle 110).

The vehicle positioning system 112 comprises two sensors: an externally facing camera 116 and a GPS sensor 118. These two sensors 116, 118 output data which is used by the vehicle positioning system 112 to determine an accurate geographical position of the vehicle 110. In other examples (not shown) one or more further sensors such as an accelerometer could be present in the vehicle 110. Combining data from multiple sensors allows the vehicle positioning system 112 to determine a more accurate location of the vehicle 110.

In the example shown in Figure 1, the vehicle positioning system 112 is also connected to a vehicle traces server system 150. The vehicle 110 is arranged to transmit location information determined by the vehicle positioning system 112 to the vehicle traces server system 150. This location information can be stored in the vehicle traces database 152, and used to inform future analysis regarding vehicle movement patterns. Location information can be sent to the vehicle traces server system 150 intermittently and/or periodically - for example, daily, weekly or monthly, or when a total volume of historical location information locally stored in the vehicle has reached a threshold. However, in other examples, a vehicle 110 need not necessarily upload any data to the vehicle traces database 152, which may instead be generated using data from other sources.

The vehicle control system 114 comprises a processing system and a memory storing a digital map 120 of the road network and local behaviour map data 122. The vehicle control system 114 is communicatively coupled to the vehicle positioning system 112. The vehicle control system 114 uses the position of the vehicle 110 determined by the vehicle positioning system 112 and the digital map 120 to determine the location of the vehicle 110 in the road network, and retrieves information from the digital map 120 regarding road attributes such as road geometry and speed limits. The local behaviour map data 122 comprises a copy of data from the behaviour map database 132 that is relevant to an area the vehicle is located in. This will normally include one or more representative vehicle paths along a sequence of road segments that the vehicle is currently transiting. The vehicle control system 114 retrieves this typical vehicle movement information from the local behaviour map data 122, and can use it for controlling one or more operations of the vehicle 110, such as the trajectory and/or speed of the vehicle 110.

Although the example shown in Figure 1 shows the vehicle 110 being communicatively coupled to the behaviour map server 130 and vehicle traces server system 150, in other examples this may not be the case. Instead, the vehicle 110 may be pre-loaded with behaviour map data 122 for off-line use, and/or might not be arranged to send historical location information to the vehicle traces server system 150 for future analysis.

The operation of the behaviour map processing system 134 to generate the central behaviour map database 132 is described in more detail below.

To create the central behaviour map database 132, a digital map of a road network, comprising a network of connected road segments, is analysed and sections of the road network are identified for analysis regarding representative vehicle movement. A section may be a plain stretch of road or may include a complex junction. Intersections and other complex features within the road network are likely to give rise to variable vehicle behaviour, including different typical driving paths. For example, an upcoming intersection can cause vehicles that intend to take a first turning to drive differently to vehicles that intend to take a second turning.

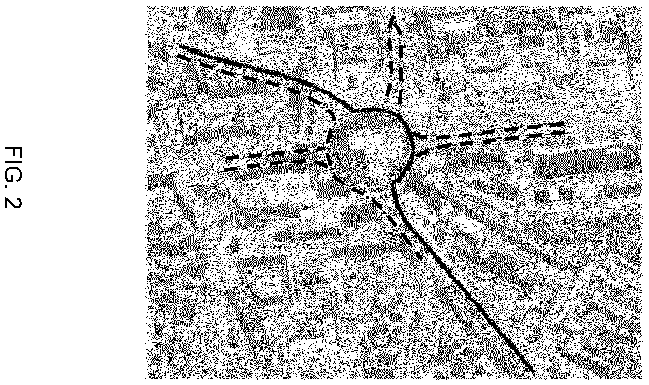

After sections of the road network are identified for further analysis, digital map data associated with each section is processed to coarsely determine all feasible routes through it. An example intersection (a roundabout), overlaid with geometric lines representing different vehicle paths, is shown in Figure 2. Road segments upstream and downstream of an intersection are added to road segments which are part of the intersection itself to form a linear sequence of road segments leading up to, through, and away from, the intersection. An example of one of these identified routes through the intersection is highlighted in the solid line in Figure 2.

The same process is repeated for all sections of the road network of interest. Depending on the constraints of the memory used to store the information relating to the central behaviour map database 132, the vehicle behaviour processing system 134 may be arranged to only analyse only a subset of road sections in the road network for inclusion in the central behaviour map database 132. This subset may be identified using a list of known complicated intersections, or alternatively, the most complicated sections of road may be automatically identified by the vehicle behaviour processing system 134.

Once a section of the road network has been identified for analysis, the historical vehicle traces which have been collected for the section of road in question are retrieved from the vehicle traces database 152. These may have been collected from a large number of different vehicles over time, thus forming a large dataset from which typical driving behaviour can be determined. Each vehicle trace comprises a sequence (e.g. a time-stamped series) of geographical positions (e.g. latitude and longitude coordinates) of a vehicle as it travelled along the sequence of road segments.

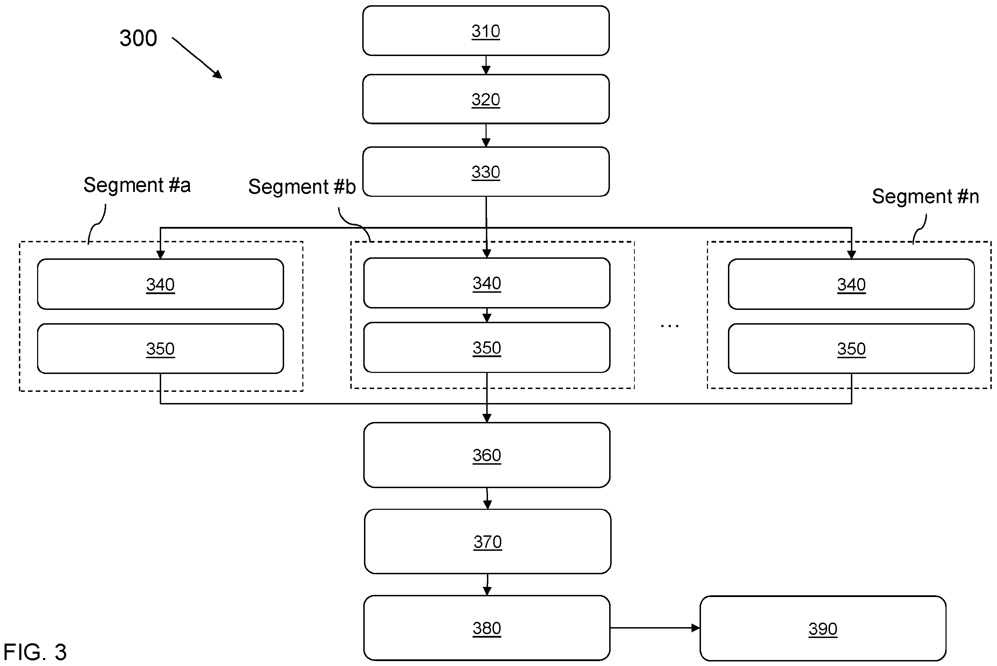

A flow chart depicting a method 300 carried out by the vehicle behaviour processing system 134 to determine representative vehicle traces for a route through the road network from the retrieved historical vehicle traces is shown in Figure 3.

In step 310, the vehicle behaviour processing system 134 determines a reference route along the sequence of road segments. In step 320, for each vehicle trace through the route, all or a subset of the geographical positions of the trace are converted to respective positive and negative lateral displacement values indicating a lateral displacement of the geographical position from the reference route (i.e. along a line, intersecting the geographical position, that is perpendicular to the reference route, or that is perpendicular to the vehicle trace).

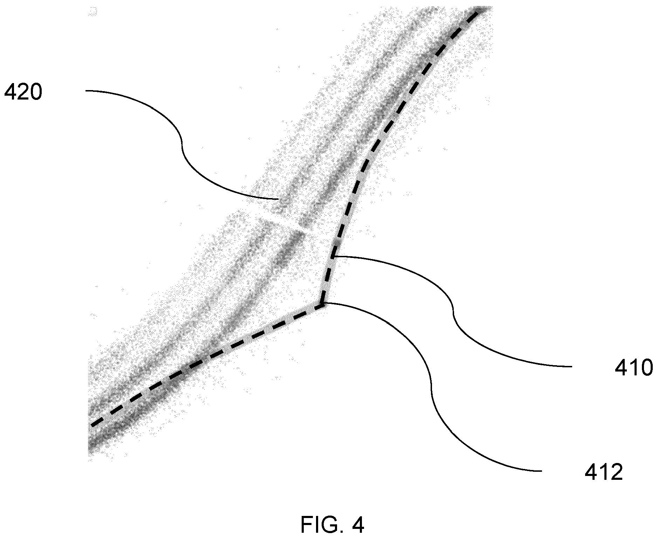

A first approach would to use a centreline of the geometry of the road in a digital map as the reference route. Although this information is readily available, the applicant has appreciated that this can cause disruption to the resulting lateral displacement calculations. The actual path of vehicles travelling through a road network typically deviates from the topological road geometry which is associated with the digital map. This topological geometry is usually simplified, and in some instances, where the road is curved, sharp angles which are not actually present in the road appear in the digital map, e.g. due to resolution limitations. An example of this discrepancy is shown in Figure 4. The digital map line 410 includes a sharp corner 412. However, the vehicle traces 420 do not follow the same sharp angle.

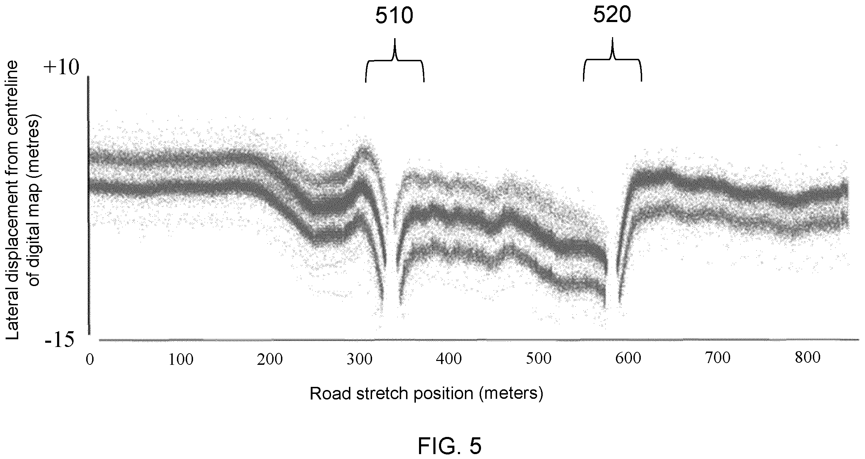

An example of the resulting lateral displacement data that is calculated if using the digital map line 410 as the reference route is shown in Figure 5. As can be seen in Figure 5, the lateral displacement data shows a significant deviation from the topological centreline of the road at positions 510 and 520. This artificially inflates the maximum and minimum bounds for the lateral displacement data, and results in unnatural discontinuities which can cause problems in later processing.

While this approach may be used in some embodiments, a second approach is preferred in which a reference route is determined by processing the vehicle traces. This results in a reference route that is more representative of the geometry of the path actually followed by the vehicles.

Several different methods may be used to determine similarly effective reference routes for a stretch of road. For example, a vehicle trace may be randomly selected from the plurality of vehicle traces, or a representative vehicle trace may be selected from the plurality of vehicle traces, or an average trace may be calculated.

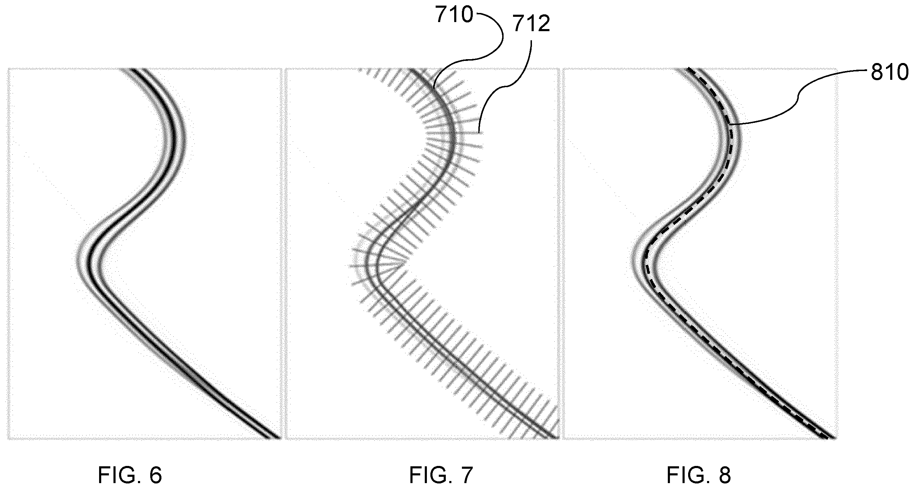

A method used in some embodiments to construct a reference route along a route is described with reference to Figures 6, 7 and 8. Figure 6 shows original vehicle traces along a section of a route. A random trace 710 is chosen, and, as shown in Figure 7, a series of orthogonal lines 712 are computed at regular intervals along the length of the random trace 710. For each orthogonal line 712, a respective intersection point between the orthogonal line 712 and each vehicle trace is then determined. An average (mean displacement) intersection point for each orthogonal line is selected, and an average vehicle trace 810, as shown in Figure 8, is constructed by fitting a curve through these average intersection points from each orthogonal line (using any appropriate curve fitting algorithm).

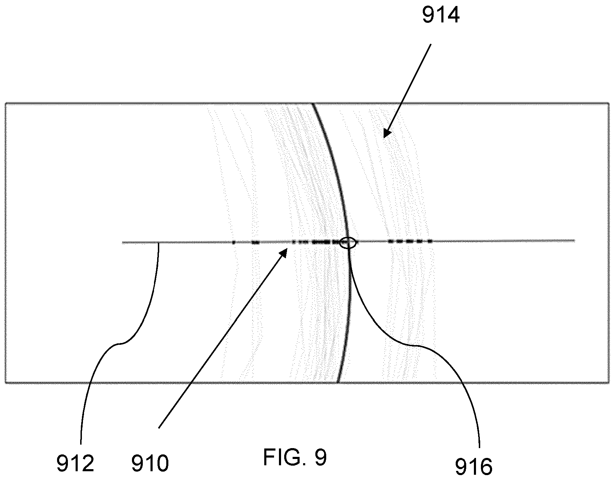

Figure 9 shows a close-up view of an example of a set of intersection points 910 determined between an orthogonal line 912 and the vehicle traces 914. The average intersection point 916 may be determined to be a mean or median intersection point from the set of intersection points 910.

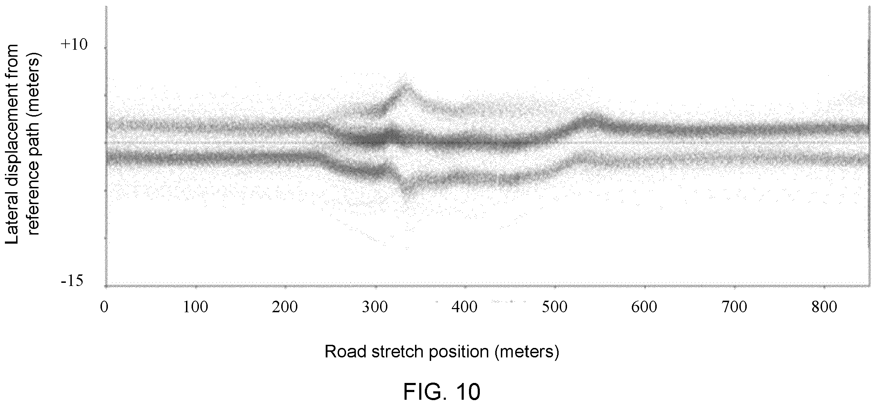

The result of using a reference route corresponding to a determined average vehicle trace to calculate the lateral displacement data is shown in Figure 10. As can be seen in Figure 10, the variance of the lateral displacement data is reduced considerably compared to the variance of the lateral displacement data shown in Figure 5, for the same input vehicle traces.

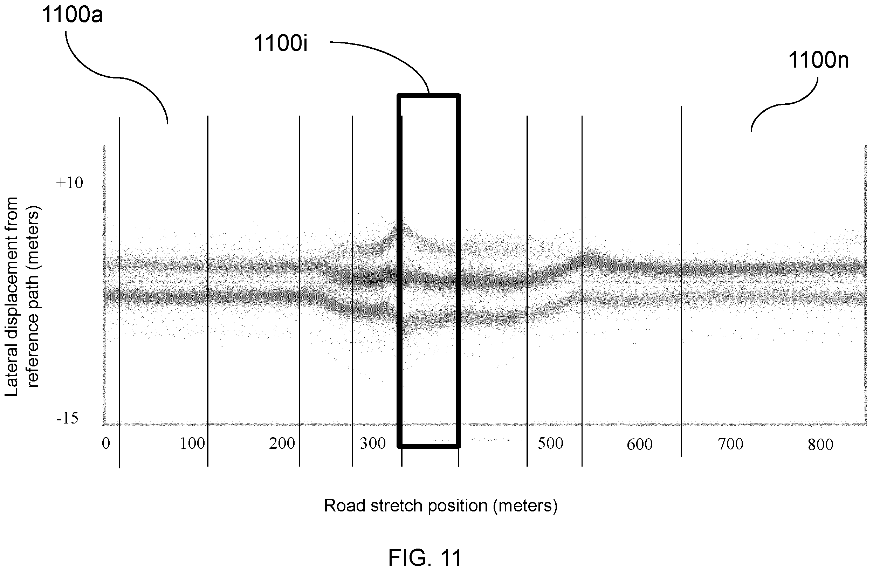

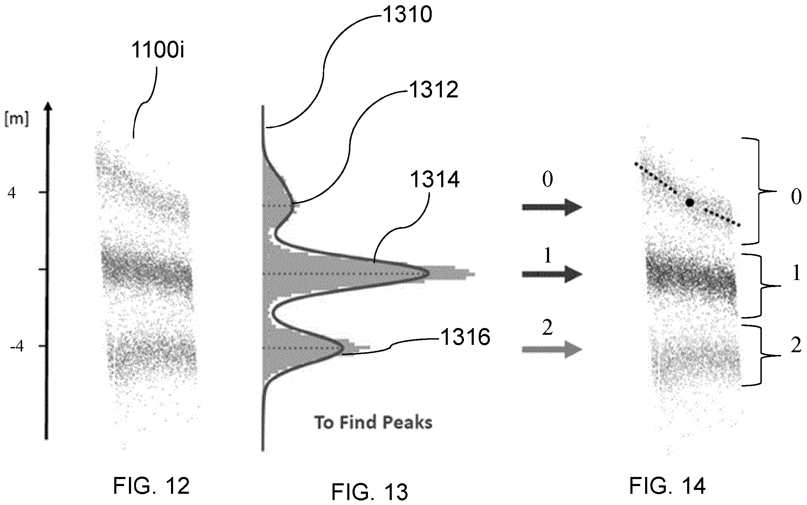

Referring again to Figure 3, next, in step 330, the lateral displacement data is split into segments, and each segment of data is analysed separately. Each segment of lateral displacement data corresponds to a road segment of the identified sequence of road segments through the road network. Figure 11 shows an example of dividing the lateral displacement data shown in Figure 10 into smaller segments 1100a-1100n. As can be seen from the scale on the bottom axis in Figure 11, road segments may be of the order of 50m-100m, although they could be shorter or longer than this. In the example shown, the sizes of road segments vary along a road stretch according to the changing complexity of the route. An extracted segment of lateral displacement data 1100i is shown in isolation in Figure 12.

Referring again to Figure 3, the next two steps 340 and 350 are carried out for each segment of lateral displacement data. The outcome of the two steps is that each vehicle trace through each road segment is described using a single segment-specific route index.

The segment-specific route indices are used to compactly represent the route which the vehicle in question took through the road segment by a single integer value. For example, traffic travelling through a road segment might be travelling in one of three different lanes, and the segment-specific route index assigned to a vehicle trace may describe which lane a vehicle was travelling in for the duration, or majority, of the road segment. These traffic lanes could be delineated by markings on the road surface. However, the applicant has appreciated that in reality, traffic flow through a road segment may not be limited to being contained within lanes delineated by markings on the road surface. Traffic may nonetheless exhibit predictable behaviour by following a set of typical routes along a road segment. In this sense, a segment-specific route index may still be considered a lane index, even though this may not necessarily correspond to traffic lanes marked on the road surface.

To determine how many of these de-facto lanes there are through each road segment, in step 340, the lateral displacement data is processed to determine a set of segment-specific route indices for the road segment. These route indices are determined by clustering similar lateral displacement values within the lateral displacement data for the road segment. Figures 13 and 14 depict the steps in this process for the segment of lateral displacement data 1100i shown in Figure 12. As shown in Figure 13, the lateral displacement data for the road segment is first modelled as a distribution 1310. After testing various algorithms, the applicant found that kernel density estimation provided the most robust results for modelling the distribution. This distribution 1310 is then analysed to detect peaks in the data. In the example shown in Figure 13, three peaks are identified - a first peak 1312, a second peak 1314, and a third peak 1316. The peak finding algorithm is tuned by various predetermined parameters to only identify the most significant peaks in the data. These parameters could be implemented as configurable parameters which can be tuned depending on the level of detail required for the behaviour map data.

By dynamically identifying how many significant peaks there are in the data, the number of lanes of traffic travelling through each segment can be identified. The beneficially avoids artificially constraining the process to using a number of anticipated lanes of traffic for each road segment (e.g. based on observed road marking), which, as discussed above, may not be appropriate for representing typical driving behaviour.

Next, each lateral displacement value is assigned to a segment-specific index, each index corresponding to a respective distribution peak. As shown in Figure 14, a first group of lateral displacement values are assigned to a first index 0 associated with the first peak 1312; a second group of lateral displacement values are assigned to a second index 1 associated with the second peak 1314, and a third group of lateral displacement values are assigned to a third index 2 associated with the third peak 1316.

In step 350, a segment-specific route index is determined for each vehicle trace through the road segment. To do so, the individual lateral displacement values are mapped back to the vehicle traces they belong to, and for each vehicle trace, the best fitting index is chosen depending on index which the majority of its individual lateral displacement values were assigned to. This process allows groups of vehicle traces which follow a similar route through the road segment to be identified.

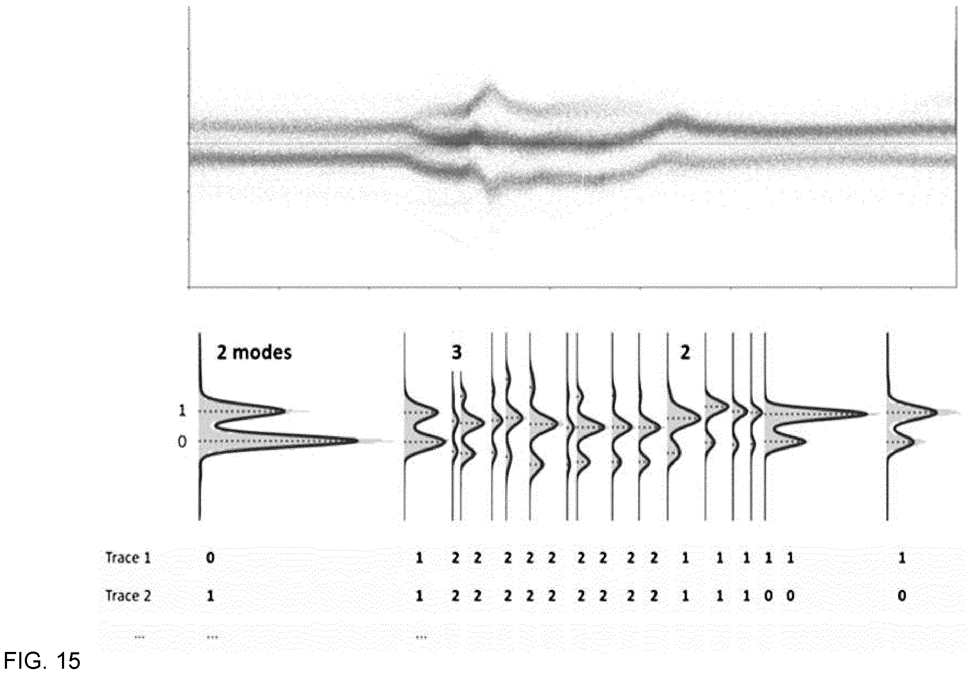

Turning back to Figure 3, once each vehicle trace has been labelled with a segment-specific index for each road segment, in step 360, the segments are combined to determine a respective sequence of route indices for each vehicle trace. It can be seen that as a result of steps 310-360, the sequence of geographical positions for each vehicle trace has been reduced to a simplified sequence of route indices. Figure 15 shows an example of a sequence of route indices for two traces generated using the process described above. For example, trace 1 starts in a first traffic lane of two lanes, labelled with index 0, for one segment; then moves to a second traffic lane of two lanes, labelled with index 1, for one segment; then moves to a third traffic lane of three lanes, labelled with index 2, for nine segments; then moves to a second lane of two lanes, labelled with index 1, for six segments, by the end of the route sequence. It can be seen that the volume of data used to describe the movement of this vehicle within the road has been greatly reduced (i.e. to the sequence {0,1,2,2,2,2,2,2,2,2,2,1,1,1,1,1,1}) compared to the lateral displacement data shown in Figure 10 (which is replicated in the top-half of Figure 15, for ease of reference).

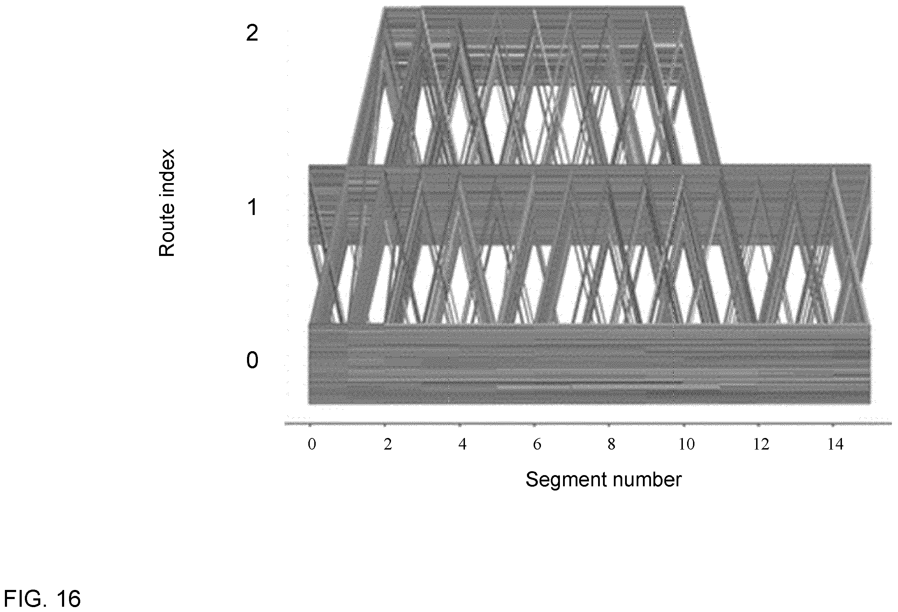

Figure 16 depicts a large number of vehicle traces along a section of road, represented as sequences of route indices. As can be seen in Figure 16, there are initially two identified lanes of traffic at the beginning of the section. Every vehicle trace is therefore assigned to index 0 or index 1. In the central section of the route, an extra lane of traffic emerges, and some of the traces from index 0 and index 1 transition to index 2. By the end of the route, traffic flow returns to two lanes only.

In step 370, the vehicle traces are grouped based on similarities between the sequences of segment indices. The applicant has appreciated that simplifying the input data to this grouping process reduces the processing burden required considerably, whilst still allowing common paths which groups of vehicles typically take through the route to be identified.

The applicant has found that clustering algorithms such as k-means clustering are effective for identifying common sequences of route indices shared by the vehicles. The k-means clustering algorithm iterates through several different sets of clusters for the vehicle traces, where the vehicle traces are clustered using the sequences of route indices as input. A quality score is determined for each clustering, and the iteration of the clustering process resulting the highest score is selected to partition the vehicle traces into groups.

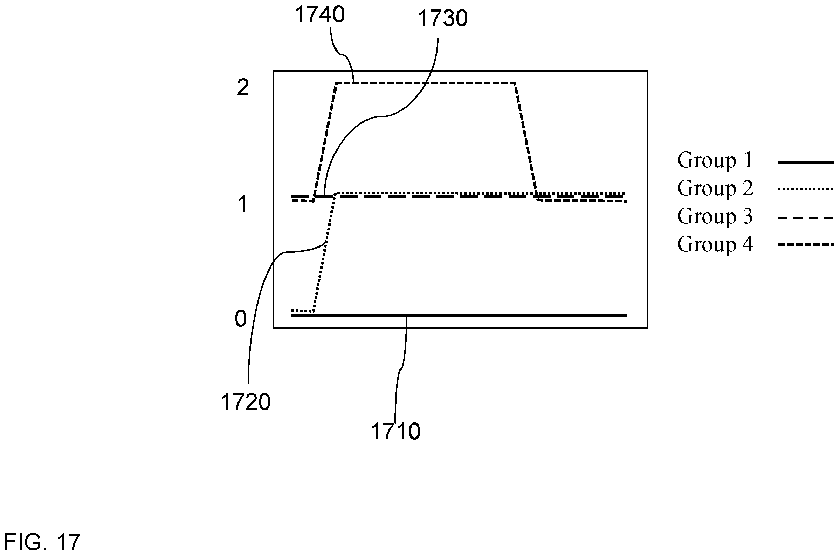

Figure 17 shows an example of the different groups identified by the clustering process for the sequences of route indices shown in Figure 16. The first group 1710 comprises vehicle which remained in lane 0 throughout the route. The second group 1720 comprises vehicles which started in lane 0, then moved to lane 1. The third group 1730 comprises vehicles which started in lane 1, and remained in lane 1. The fourth group 1740 comprises vehicles which started in lane 1, moved to lane 2, then returned to lane 1.

Finally, referring back to Figure 3, a representative vehicle path is determined for each identified group in step 380, and subsequently stored in the central behaviour map database 132 in step 390. To determine the representative vehicle paths in step 380, geographical data associated with each vehicle trace is re-introduced. To determine the spatial geometry of a representative vehicle path, an average vehicle trace is calculated using the sequence of geographical positions from each of the vehicle traces of the group. A sequence of average geographical positions along the route through the road network is calculated, and spline interpolation of the sequence of average geographical positions is used to create a geometric line, e.g. using a cubic spline. This geometric line represents one of the typical paths taken by vehicles along the identified sequence of road segments through the road network.

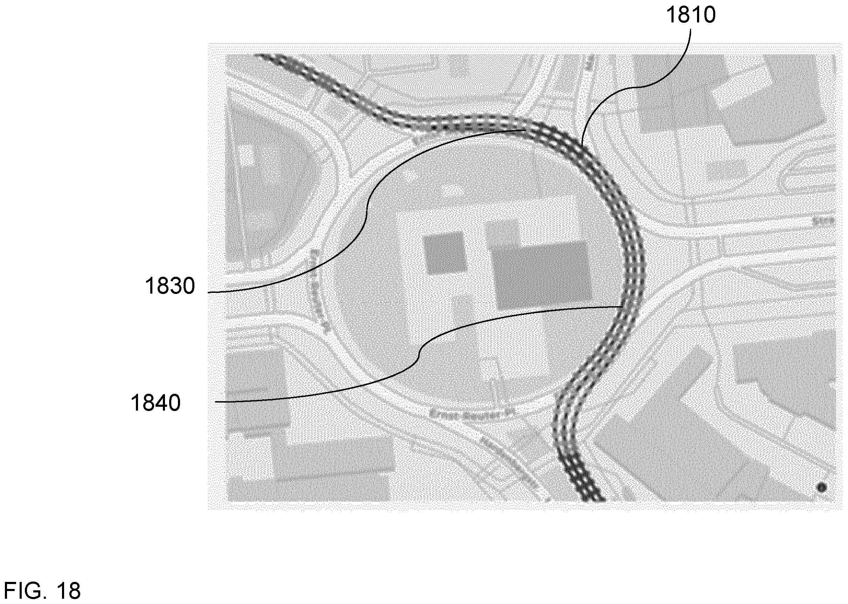

Figure 18 shows three exemplary representative vehicle paths overlaid on the digital map of the section which has been analysed. A first representative path 1810 matches the motion of the first group identified as described with respect to Figure 17 - i.e. the representative path begins in lane 1, and remains in lane 1 for the duration of the section. A second representative path 1830 matches the motion of the third group identified as described with respect to Figure 17 - i.e. the second representative path 1830 begins in lane 2, and remains in lane 2 for the duration of the section. A third representative path 1840 matches the motion of the fourth group identified as described with respect to Figure 17 - i.e. the fourth representative path 1840 begins in lane 2, transitions to lane 3, then returns to lane 2.

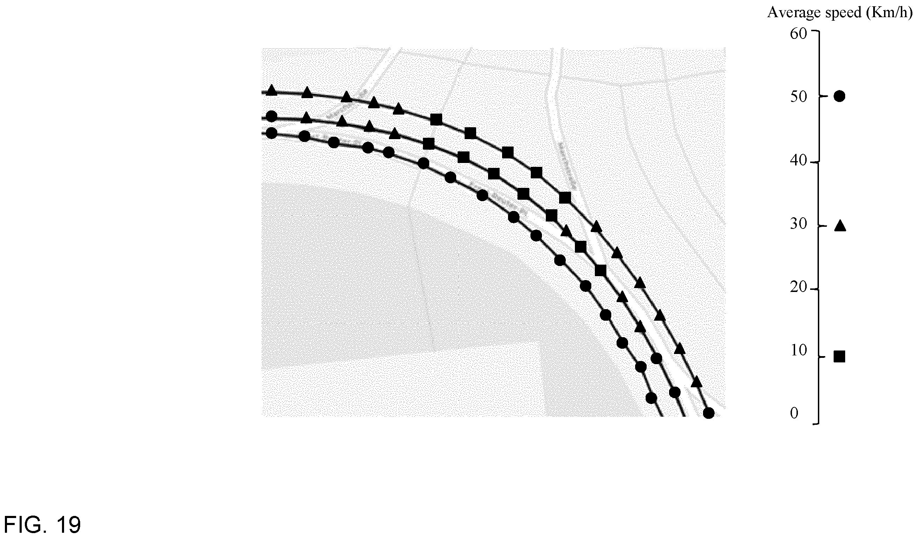

Determining a representative vehicle path also comprises determining a sequence of driving attributes associated with the sequence of average geographical positions. For example, at each average geographical position, an average vehicle speed is computed as the harmonic mean of the driving speeds associated with each of the vehicles in the vehicles traces at that location. The changing speeds at each average geographical position for a section of the representative vehicle traces are shown in Figure 19 . As indicated by the key included in Figure 19, positions associated with speeds between 40km/h and 60km/h are represented by a circle. Positions associated with speeds between 20km/h and 40km/h are represented by a triangle. Positions associated with speeds between 0km/h and 20km/h are represented by a square.

The same process can be carried out to determine other representative driving attributes such as acceleration and deceleration. Considering these types of attributes allow a more complete impression of typical vehicle movement (e.g. driving behaviour) to be understood. For example, analysing changing acceleration and speeds can be used to identify positions along the section where vehicles commonly stop. When the vehicle control system 114 has access to this information, it can pre-warn a driver that the vehicle is approaching a stop-zone, allowing the driver to slow the vehicle down gradually and avoid collisions, or the vehicle control system 114 may slow the vehicle directly (e.g. by overriding the driver or if the vehicle is driverless).

The data associated with the representative vehicle paths can also be used to identify other potentially dangerous sections of roads, e.g. sections of road where lanes of traffic typically merge, or sections of road with a high variance in typical vehicle behaviour, indicating a potentially uncertain or complex driving situation. In a similar manner to identified stop-zones, when the vehicle control system 114 has access to this information, it can pre-warn a user that the vehicle is approaching an area that is potentially more dangerous, allowing the driver to slow the vehicle down and approach the upcoming section of the road with caution, or the vehicle control system 114 may slow the vehicle directly (e.g. by overriding the driver or if the vehicle is driverless).

The central behaviour map database 132 may be updated at intervals by repeating the method described above using new vehicle traces as input. The resulting updated central behaviour map 132 can be transmitted to the vehicle 110 to update the local behaviour map 122 at intervals.

It will be appreciated by those skilled in the art that the invention has been illustrated by describing one or more specific embodiments thereof, but is not limited to these embodiments; many variations and modifications are possible, within the scope of the accompanying claims.

## Claims

1. A method of determining representative vehicle paths along a sequence of road segments of a road network, the method comprising:
accessing a plurality of vehicle traces, each vehicle trace comprising a respective sequence of geographical positions for a respective vehicle as the vehicle transits the sequence of road segments;
for each of the road segments of the sequence of road segments, processing each of the vehicle traces to determine at least one respective segment-specific route index for the vehicle trace, wherein the segment-specific route index is selected from a predetermined set of one or more route indices for the road segment, each segment-specific route index corresponding to a different set of possible routes along the road segment, and thereby determining, for each of the plurality of vehicle traces, a respective sequence of route indices;
determining a similarity-based partitioning of the plurality of sequences of route indices and thereby partitioning the plurality of vehicle traces into a plurality of groups of vehicle traces; and
for each of the groups of vehicle traces, processing the sequence of geographical positions of one or more vehicle traces of the group to determine a representative vehicle path for the group along the sequence of road segments.

2. The method of claim 1 comprising, for each vehicle trace, determining a respective lateral displacement value for all or a subset of the geographical positions in the sequence of geographical positions, the lateral displacement value indicating a lateral displacement of the geographical position relative to a reference route along the sequence of road segments, and thereby determining, for each of the plurality of vehicle traces, a respective sequence of lateral displacement values.

3. The method of claim 2, comprising determining the reference route by processing all or a subset of the plurality of vehicle traces to calculate an average vehicle trace, wherein the reference route is, or follows, the average vehicle trace.

4. The method of claim 2 or 3, wherein the method comprises, for each of the road segments of the sequence of road segments, processing each of the sequences of lateral displacement values to determine the respective segment-specific route index for each vehicle trace.

5. The method of any preceding claim, comprising, for each road segment of the sequence of road segments, determining the set of segment-specific route indices by grouping the vehicle traces through the road segment into one or more road-segment clusters, and assigning a different segment-specific route index to each road-segment cluster of vehicle traces.

6. The method of any preceding claim, wherein the predetermined set of one or more route indices for each road segment is a respective set of one or more lane indices corresponding to lanes of the respective road segment.

7. The method of any preceding claim, wherein determining a respective representative vehicle driving path for each of the groups of vehicle traces comprises processing the sequences of geographical positions for each of the vehicle traces of the group to calculate an average vehicle trace for the group.

8. The method of any preceding claim, further comprising determining, for each of the groups of vehicle traces, a respective sequence of driving attribute values, each driving attribute value being associated with a respective point along the sequence of road segments, .

9. The method of claim 8, wherein each sequence of driving attribute values comprises a sequence of measures of vehicle speed.

10. The method of any preceding claim, further comprising processing the representative vehicle paths to identify one or more sections of the sequence of road segments as potentially hazardous.

11. Software comprising instructions which, when executed on a processing system, cause the processing system to carry out a method of determining representative vehicle paths along a sequence of road segments of a road network as claimed in any preceding claim.

12. A processing system configured to carry out a method of determining representative vehicle paths along a sequence of road segments of a road network as claimed in any of claims 1 to 10.

13. The processing system of claim 12, further configured for communication with a vehicle control system of a vehicle travelling through the road network, and wherein the processing system is configured to send data comprising the representative vehicle paths to the vehicle control system of the vehicle.

14. A vehicle control system for a vehicle travelling through a road network, wherein the vehicle control system is configured to:
access data comprising one or more representative vehicle paths along a sequence of road segments of the road network;
determine a geographical position of the vehicle;
select one of the representative vehicle paths based upon the determined geographical position of the vehicle; and
use information derived from the selected representative vehicle path to control movement of the vehicle or to communicate the information to a driver of the vehicle.

15. The vehicle control system of claim 14, wherein the vehicle control system is configured to determine the geographical position of the vehicle using sensor data output by one or more sensors in or on the vehicle, optionally comprising a global navigation satellite system sensor arranged to receive satellite positioning signals.
